# EUROPEAN PATENT SPECIFICATION

(11) **EP 3 671 049 B1**
(45) Date of publication and mention of the grant of the patent: **19.07.2023**
(21) Application number: 19191602.2
(22) Date of filing: 13.08.2019
(51) Int. Cl.: F24D 3/18, F24D 17/02, F24D 19/10, F24H 4/02, F24H 9/20, F25B 40/00

(54) **HEAT PUMP SYSTEM**
WÄRMEPUMPENSYSTEM
SYSTÈME DE POMPE À CHALEUR

(30) Priority: 17.12.2018 JP 2018235502
(43) Date of publication of application: 24.06.2020
(73) Proprietor: Panasonic Intellectual Property Management Co., Ltd., Osaka-shi, Osaka 540-6207 (JP)
(72) Inventor: KOISHIHARA, Kazuki, Osaka, 540-6207 (JP); YAMAOKA, Yuki, Osaka, 540-6207 (JP); MACHIDA, Kazuhiko, Osaka, 540-6207 (JP); NAKATANI, Kazuhito, Osaka, 540-6207 (JP); IMAGAWA, Tsuneko, Osaka, 540-6207 (JP); AOYAMA, Shigeo, Osaka, 540-6207 (JP); MORIWAKI, Shunji, Osaka, 540-6207 (JP); HSU, Chihsuan, Osaka, 540-6207 (JP); ISAYAMA, Yasuhiko, Osaka, 540-6207 (JP)
(74) Representative: Eisenführ Speiser

(56) References cited:
- EP-A1- 3 009 767
- WO-A1-2012/008431
- DE-T5-112016 004 544
- US-A1- 2011 036 110
- US-A1- 2012 000 236

## Description

### [TECHNICAL FIELD]

The present invention relates to a heat pump system.

### [BACKGROUND TECHNIQUE]

Conventionally, there is proposed a heat pump system having a multistage compression heat pump circuit in which both refrigerant discharged from a low stage-side compressor and refrigerant discharged from a high stage-side compressor are utilized for heating water (see patent document 1 for example).

In the conventional heat pump system described in patent document 1, a compressing mechanism includes a low stage-side compressing mechanism and a high stage-side compressing mechanism having constant volume ratios, and the compressing mechanism, an expansion mechanism and an evaporator are sequentially connected to one another through at least a pipe, and this heat pump system includes a heat pump circuit.

Further, the conventional heat pump system includes an intercooler which heat-exchanges between fluid flowing through a first path of a heat load circuit and refrigerant flowing from a discharge side of the low stage-side compressing mechanism to a suction side of the high stage-side compressing mechanism.

Further, the conventional heat pump system includes a gas cooler which heat-exchanges between refrigerant flowing from the high stage-side compressing mechanism to the expansion mechanism and fluid flowing through a second path of the heat load circuit.

Flow rates of water groups respectively flowing through the intercooler and the gas cooler which are connected to each other in parallel are adjusted by a mixing valve, the water groups are heated by the intercooler and the gas cooler and thereafter, they merge with each other.

From patent document 2, a refrigeration apparatus is known, which includes a refrigerant circuit, a water circuit and a control unit. The design of the refrigeration apparatus is similar to that known from patent document 1, with the refrigerant circuit having a compression mechanism with a low stage compression element and a high stage compression element, an intercooler for exchanging heat with an intermediate water tube, a heat source-side heat exchanger for exchanging heat with a heat source water tube, an expansion mechanism, a usage-side heat exchanger, and an economizer circuit with an economizer heat exchanger and an economizer expansion mechanism. The heat source-side heat exchanger and the intercooler are arranged in parallel.

Patent document 3 discloses a heat pump device including, inter alia, a refrigerant circuit with a compressor, a first gas cooler as a first heat exchanger, a second gas cooler as a second heat exchanger, an expansion valve, an evaporator and a control unit. The first and second gas coolers exchange heat between a first refrigerant heat transfer channel and a first liquid heat transfer channel, and between a second refrigerant heat transfer channel and a second liquid heat transfer channel. The first and second gas coolers are arranged in line, such that the liquid heated by the second gas cooler flows through the first gas cooler for further being heated. High-pressure refrigerant discharged by the first gas cooler flows into an internal space of the compressor, where it reduces the temperature of an electric actuating element and a surface temperature of the container of the compressor.

### [PRIOR ART DOCUMENTS]

### [Patent Documents]

[Patent Document 1] PCT International Publication No.2012/008431
[Patent Document 2] US patent application 2011/0036110
[Patent Document 3] EP patent application 3 009 767

### [SUMMARY OF THE INVENTION]

### [PROBLEM TO BE SOLVED BY THE INVENTION]

However, the conventional heat pump system has a problem that since water groups flow through the intercooler and the gas cooler in parallel, a device for adjusting a distribution ratio of water is required, and a configuration of a water side circuit becomes complicated.

Further, the conventional heat pump system also has a problem that since the water groups flow through the intercooler and the gas cooler in parallel and they merge with each other after they are heated by the intercooler and the gas cooler, it becomes complicated to control the water flow rate, and temperature of hot water.

The present invention has been accomplished to solve the conventional problems, and it is an object of the invention to provide a heat pump system including a multistage compression heat pump circuit and capable of simplifying both a configuration of a utilization-side heating medium circuit and a flow rate control of the utilization-side heating medium.

### [MEANS FOR SOLVING THE PROBLEM]

To solve the conventional problems, the present invention provides a heat pump system as defined in the appended claims including: a heat pump circuit formed by sequentially connecting, to one another, a compressing mechanism including a high stage-side compressing mechanism and a low stage-side compressing mechanism, a first expanding device and a heat source-side heat exchanger through at least a pipe, and refrigerant circulating through the heat pump circuit; a control device for controlling operation of the heat pump system; a utilization-side heating medium circuit through which utilization-side heating medium flows; a utilization-side heat exchanger for heat-exchanging between the refrigerant flowing from the high stage-side compressing mechanism to the first expanding device and the utilization-side heating medium flowing through the utilization-side heating medium circuit; an intercooler for heat-exchanging between the refrigerant discharged from the low stage-side compressing mechanism and the utilization-side heating medium flowing through the utilization-side heating medium circuit; and an injection refrigerant circuit in which the refrigerant flowing through the heat pump circuit is branched off from a position between the utilization-side heat exchanger and the first expanding device, the branched refrigerant is decompressed by a second expanding device, thereafter, the refrigerant joins up, with the refrigerant after it flows out from the intercooler, and the joined refrigerant is sucked into the high stage-side compressing mechanism; wherein the utilization-side heat exchanger and the intercooler are connected to each other in series in the utilization-side heating medium circuit, and the control device is configured to adjust decompression amounts of the first expanding device and the second expanding device such that a ratio of the circulation amount of refrigerant on the side of the injection refrigerant circuit with respect to the circulation amount of refrigerant of the heat pump circuit becomes 30% to 60%, whereby a ratio of the heating capacity in the intercooler with respect to a total of the heating capacity in the utilization-side heat exchanger and the heating capacity in the intercooler is 15% to 25%.

According to this, since the utilization-side heat exchanger and the intercooler are connected to each other in series in the utilization-side heating medium circuit, it is possible to simplify a configuration of the utilization-side heating medium circuit as compared with a case where they are connected to each other in parallel. Further, it becomes easy to adjust a transportation amount of the utilization-side heating medium, and it is also possible to easily adjust temperature of the utilization-side heating medium.

Furthermore, a flow rate of utilization-side heating medium flowing through the utilization-side heat exchanger and the intercooler is increased as compared with the case where they are connected to each other in parallel. Therefore, heat transfer coefficient of the utilization-side heating medium flowing through the utilization-side heat exchanger and the intercooler is enhanced, heat-exchange efficiency in the utilization-side heat exchanger and the intercooler is enhanced. Hence, energy saving performance of the heat pump system can be enhanced.

### [EFFECT OF THE INVENTION]

According to the present invention, it is possible to provide a heat pump system including a multistage compression heat pump circuit and capable of simplifying both the configuration of the utilization-side heating medium circuit and the flow rate control of the utilization-side heating medium.

### [BRIEF DESCRIPTION OF THE DRAWINGS]

Fig. 1 is a block diagram of a heat pump system of a first embodiment of the present invention;
Fig. 2 is a Mollier diagram (P-h diagram) showing an ideal state of refrigerant flowing through a heat pump circuit when the heat pump system is operated;
Fig. 3 is a diagram showing a relation between a ratio of heating capacity of an intercooler with respect to overall heating capacity of the heat pump circuit and COP of the heat pump circuit; and
Fig. 4 is a diagram showing a relation between an injection ratio in the heat pump circuit and a ratio of heating capacity of the intercooler with respect to overall heating capacity of the heat pump circuit.

### [MODE FOR CARRYING OUT THE INVENTION]

A first aspect of the present invention provides a heat pump system including: a heat pump circuit formed by sequentially connecting, to one another, a compressing mechanism including a high stage-side compressing mechanism and a low stage-side compressing mechanism, a first expanding device and a heat source-side heat exchanger through at least a pipe, and refrigerant circulating through the heat pump circuit; a control device for controlling operation of the heat pump system; a utilization-side heating medium circuit through which utilization-side heating medium flows; a utilization-side heat exchanger for heat-exchanging between the refrigerant flowing from the high stage-side compressing mechanism to the first expanding device and the utilization-side heating medium flowing through the utilization-side heating medium circuit; an injection refrigerant circuit in which the refrigerant flowing through the heat pump circuit is branched off from a position between the utilization-side heat exchanger and the first expanding device, the branched refrigerant is decompressed by a second expanding device, thereafter, the refrigerant joins up, with the refrigerant after it flows out from the intercooler, and the joined refrigerant is sucked into the high stage-side compressing mechanism; wherein the utilization-side heat exchanger and the intercooler are connected to each other in series in the utilization-side heating medium circuit, and the control device is configured to adjust decompression amounts of the first expanding device and the second expanding device such that a ratio of the circulation amount of refrigerant on the side of the injection refrigerant circuit with respect to the circulation amount of refrigerant of the heat pump circuit becomes 30% to 60%, whereby a ratio of the heating capacity in the intercooler with respect to a total of the heating capacity in the utilization-side heat exchanger and the heating capacity in the intercooler is 15% to 25%.

According to this, since the utilization-side heat exchanger and the intercooler are connected to each other in series in the utilization-side heating medium circuit, it is possible to simplify the configuration of the utilization-side heating medium circuit as compared with a case where they are connected to each other in parallel. Further, it becomes easy to adjust the transportation amount of the utilization-side heating medium, and it is also possible to easily adjust the temperature of the utilization-side heating medium.

Further, a flow rate of the utilization-side heating medium flowing through the utilization-side heat exchanger and the intercooler is increased as compared with a case where they are connected to each other in parallel. Therefore, heat transfer coefficient of the utilization-side heating medium flowing through the utilization-side heat exchanger and the intercooler is enhanced, and the heat-exchange efficiency in the utilization-side heat exchanger and the intercooler is enhanced. Hence, energy saving performance of the heat pump system can be enhanced.

According to a second aspect, especially in the first aspect, the heat pump system further includes a transfer device, and if the transfer device is driven, the utilization-side heating medium flowing through the utilization-side heating medium circuit flows through the utilization-side heat exchanger and the intercooler in this order.

According to this, the low temperature utilization-side heating medium flows into the utilization-side heat exchanger and the heating medium heat-exchanges with refrigerant discharged from the high stage-side compressing mechanism in the utilization-side heat exchanger. Therefore, temperature of refrigerant existing in an outlet of the utilization-side heat exchanger is lowered, an enthalpy difference on the side of the utilization-side heat exchanger is increased and refrigerant flows into the heat source-side heat exchanger in a low enthalpy state. Hence, a heat absorption amount in the heat source-side heat exchanger is increased, and operational efficiency of the heat pump system can be enhanced.

On the other hand, utilization-side heating medium heated by the utilization-side heat exchanger flows into the intercooler and the heating medium heat-exchanges with refrigerant discharged from the low stage-side compressing mechanism. Therefore, temperature of refrigerant in the outlet of the intercooler becomes high, and temperature of refrigerant sucked into the high stage-side compressing mechanism also becomes high.

Hence, in an injection refrigerant circuit, even if an amount of refrigerant sucked into the high stage-side compressing mechanism is increased, temperature of refrigerant discharged from the high stage-side compressing mechanism can be maintained high and therefore, temperature of the utilization-side heating medium can be made high and ability thereof can be enhanced.

The refrigerant and the utilization-side heating medium respectively flow through the utilization-side heat exchanger and the intercooler such that a relation of heating capacity Q1 in the utilization-side heat exchanger and heating capacity Q2 in the intercooler becomes Q1>Q2.

According to this, a variation amount of enthalpy when refrigerant and the utilization-side heating medium in the intercooler heat-exchanges with each other is smaller than a variation amount of enthalpy when refrigerant and the utilization-side heating medium in the utilization-side heat exchanger heat-exchanges with each other. Therefore, speed of flow of the utilization-side heating medium flowing through the intercooler can be made small, and flow sound of the utilization-side heating medium can be reduced.

A ratio of the heating capacity Q2 in the intercooler with respect to a total of the heating capacity Q1 in the utilization-side heat exchanger and the heating capacity Q2 in the intercooler is 15% to 25%.

According to this, when a ratio of heating capacity of the intercooler with respect to overall heating capacity of the heat pump circuit (total heating capacity of utilization-side heat exchanger and intercooler) is about 20%, COP of the heat pump circuit becomes the maximum.

Therefore, if a circulation amount of refrigerant flowing through the heat pump circuit and the transportation amount of the utilization-side heating medium flowing through the utilization-side heating medium circuit are set such that a ratio of the heating capacity of the intercooler with respect to the overall heating capacity of the heat pump circuit becomes 15% to 25%, the heat pump system can be operated with high operational efficiency.

According to a third aspect, especially in the first aspect, a relation between a utilization-side heating medium-side flow path cross-sectional area S1 of the utilization-side heat exchanger and a utilization-side heating medium-side flow path cross-sectional area S2 of the intercooler is S1<S2.

According to this, by the relation of S1<S2, the speed of flow of the utilization-side heating medium flowing through the intercooler can be made small, and the flow sound of the utilization-side heating medium in the intercooler can be reduced.

According to a fourth aspect, especially in any one of the first to third aspects, the heat pump system further includes an intermediate heat exchanger which heat-exchanges between high pressure refrigerant flowing between the utilization-side heat exchanger and the first expanding device and intermediate pressure refrigerant decompressed by the second expanding device of the injection refrigerant circuit.

According to this, in the injection refrigerant circuit, temperature of refrigerant sucked into the high stage-side compressing mechanism can be made high. Therefore, even if the amount of refrigerant sucked into the high stage-side compressing mechanism is increased, temperature of refrigerant discharged from the high stage-side compressing mechanism can be maintained high, and temperature of the utilization-side heating medium can be made high and ability thereof can be enhanced.

According to a fifth aspect, especially in any one of the first to fourth aspects, the heat pump system further includes an internal heat exchanger which heat-exchanges between high pressure refrigerant flowing between the utilization-side heat exchanger and the first expanding device and low pressure refrigerant flowing between the heat source-side heat exchanger and the low stage-side compressing mechanism.

According to this, temperature of refrigerant sucked into the low stage-side compressing mechanism rises and the refrigerant is compressed in a heated state. Therefore, temperature of refrigerant discharged from the low stage-side compressing mechanism also rises. Hence, since temperature of refrigerant in an inlet of the intercooler rises, temperature of the utilization-side heating medium can be made high and ability thereof can be enhanced.

According to a sixth aspect, especially in any one of the first to fifth aspects, carbon dioxide is used as the refrigerant.

According to this, in the utilization-side heat exchanger, since carbon dioxide refrigerant flowing from the high stage-side compressing mechanism to the first expanding device is in a supercritical state, it is possible to provide a heat pump system in which heat-exchange efficiency with respect to the utilization-side heating medium flowing through the utilization-side heating medium circuit is enhanced.

An embodiment of the present invention will be described below with reference to the drawings. The invention is not limited to the embodiment.

### (First Embodiment)

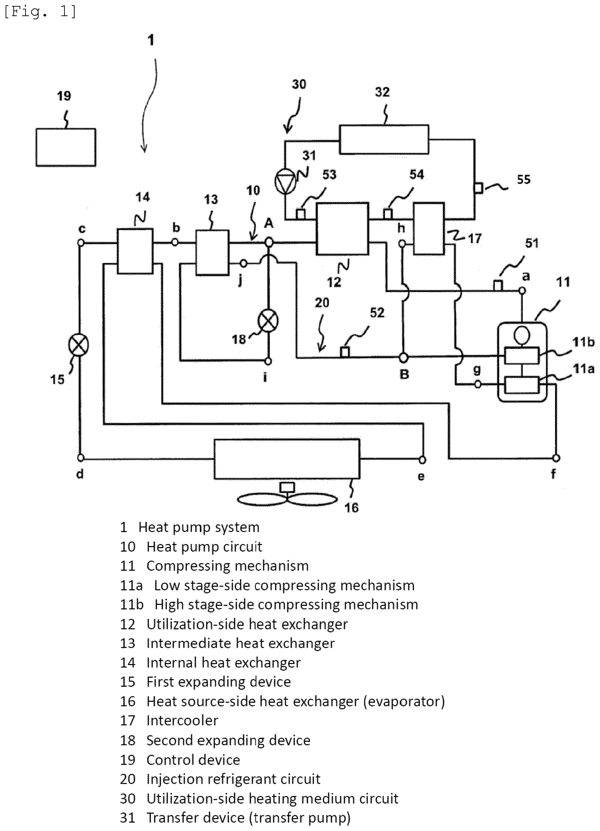

Fig. 1 is a block diagram of a heat pump system of a first embodiment of the present invention.

The heat pump system 1 is composed of a heat pump circuit 10, a utilization-side heating medium circuit 30 and a control device 19 for controlling operation of the heat pump system 1.

The heat pump circuit 10 is formed by sequentially and annularly connecting, to one another through a pipe, a multistage compressing mechanism 11, a utilization-side heat exchanger 12 which is a radiator, a first expanding device 15, and a heat source-side heat exchanger 16 which is an evaporator. Refrigerant (e.g., carbon dioxide (CO₂)) is circulating through the heat pump circuit 10.

As the refrigerant, carbon dioxide is optimal to rise temperature of utilization-side heating medium to a high value, and it is possible to use non-azeotropic mixture refrigerant such as R407C, pseudoazeotropic mixture refrigerant such as R410A and single refrigerant such as R32.

The multistage compressing mechanism 11 is for compressing refrigerant. The compressing mechanism 11 is composed of a low stage-side compressing mechanism 11a and a high stage-side compressing mechanism 11b. A volume ratio of the low stage-side compressing mechanism 11a and the high stage-side compressing mechanism 11b composing the multistage type compressing mechanism 11 is constant, a driving shaft is commonly used, and the compressing mechanism 11 is composed of one compressor placed in one container.

This embodiment will be described using the multistage compressing mechanism 11 having the low stage-side compressing mechanism 11a and the high stage-side compressing mechanism 11b placed in one container, but the compressing mechanism 11 may be a multistage compressing mechanism composed of two compressors in which the low stage-side compressing mechanism 11a and the high stage-side compressing mechanism 11b are independent from each other.

In the utilization-side heat exchanger 12 having a function as a radiator of refrigerant, high temperature and high pressure refrigerant discharged from the high stage-side compressing mechanism 11b and utilization-side heating medium (e.g., water) flowing through the utilization-side heating medium circuit 30 heat-exchanges with each other, and heated utilization-side heating medium (e.g., high temperature water) flows through the utilization-side heating medium circuit 30, and the utilization-side heating medium is used for supplying hot water and/or heating a room in the utilization-side heating medium terminal 32.

An intercooler 17 is provided. Utilization-side heating medium which is heated by the utilization-side heat exchanger 12 and which flows through the utilization-side heating medium circuit 30 is further heated by the intercooler 17 using refrigerant discharged from the low stage-side compressing mechanism 11a.

There is provided an injection refrigerant circuit 20 for connecting, to each other, the compressing mechanism 11 and a pipe extending from the utilization-side heat exchanger 12 to the first expanding device 15 of the heat pump circuit 10. The injection refrigerant circuit 20 is connected to the compressing mechanism 11 such that refrigerant which is branched off from the pipe extending from the utilization-side heat exchanger 12 to the first expanding device 15 is sucked into the high stage-side compressing mechanism 11b.

The injection refrigerant circuit 20 is provided with an intermediate heat exchanger 13 and a second expanding device 18. Refrigerant whose pressure becomes intermediate pressure by the intermediate heat exchanger 13 and the second expanding device 18 is sucked into the high stage-side compressing mechanism 11b. Refrigerant discharged from the low stage-side compressing mechanism 11a heats utilization-side heating medium which flows through the utilization-side heating medium circuit 30 by the intercooler 17 and thereafter, the refrigerant joins up with refrigerant which flows through the injection refrigerant circuit 20 and whose pressure becomes intermediate pressure, and is sucked into the high stage-side compressing mechanism 11b.

In the injection refrigerant circuit 20, partial high pressure refrigerant which is branched off from the pipe extending to the first expanding device 15 after it passes through the utilization-side heat exchanger 12, or partial high pressure refrigerant which is branched off from the pipe extending to the first expanding device 15 after it passes through the intermediate heat exchanger 13 is decompressed by the second expanding device 18 and pressure of the refrigerant becomes intermediate pressure. Thereafter, the refrigerant heat-exchanges, by the intermediate heat exchanger 13, with high pressure refrigerant which flows through the heat pump circuit 10.

Then, the refrigerant which heat-exchanges high pressure refrigerant by the intermediate heat exchanger 13 is discharged from the low stage-side compressing mechanism 11a. In the intercooler 17, this refrigerant joins up with refrigerant after it heats utilization-side heating medium flowing through the utilization-side heating medium circuit 30, and is sucked into the high stage-side compressing mechanism 11b.

The utilization-side heating medium circuit 30 is formed by sequentially connecting, to one another, the utilization-side heat exchanger 12, the intercooler 17, a transfer device 31 which is a transfer pump, and the utilization-side heating medium terminal 32.

A discharge side pipe of the high stage-side compressing mechanism 11b of the heat pump circuit 10 is provided with a high pressure-side pressure detecting device 51. The high pressure-side pressure detecting device 51 is provided in the heat pump circuit 10 extending from the discharge side of the high stage-side compressing mechanism 11b to an upstream side of the first expanding device 15. It is only necessary that the high pressure-side pressure detecting device 51 can detect pressure of high pressure refrigerant of the heat pump circuit 10.

The injection refrigerant circuit 20 is provided with an intermediate pressure-side pressure detecting device 52 on a downstream side of the second expanding device 18.

The utilization-side heating medium circuit 30 is provided with a utilization-side heat exchanger heating medium inflow temperature sensor 53 for detecting temperature of the utilization-side heating medium which flows into the utilization-side heat exchanger 12, a utilization-side heat exchanger heating medium outflow temperature sensor 54 for detecting temperature of the utilization-side heating medium which flows out from the utilization-side heat exchanger 12, and an intercooler heating medium outflow temperature sensor 55 for detecting temperature of the utilization-side heating medium which flows out from the intercooler 17.

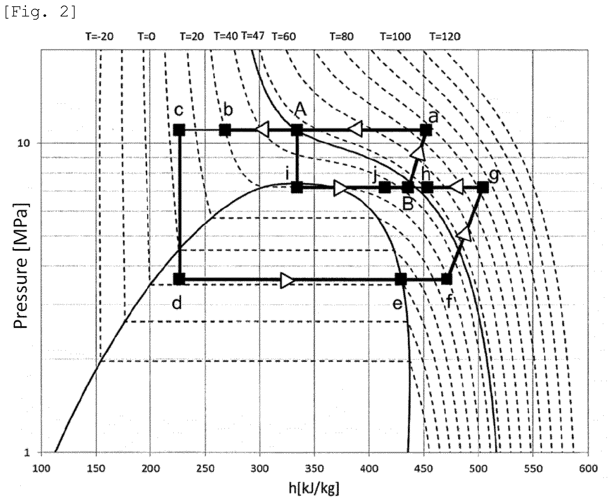

The control device 19 controls operation frequencies of the low stage-side compressing mechanism 11a and the high stage-side compressing mechanism 11b, a decompression amount of the first expanding device 15 and the second expanding device 18, and a transportation amount of the transfer device 31 by detected pressure from the high pressure-side pressure detecting device 51 and the intermediate pressure-side pressure detecting device 52 and by detected temperature from the utilization-side heat exchanger heating medium inflow temperature sensor 53, the utilization-side heat exchanger heating medium outflow temperature sensor 54 and the intercooler heating medium outflow temperature sensor 55. By this control, refrigerant flowing through the heat pump circuit 10 is brought into a state shown in Fig. 2.

A circulation amount of refrigerant flowing through the heat pump circuit 10 and the injection refrigerant circuit 20 can be adjusted by operation frequencies of the low stage-side compressing mechanism 11a and the high stage-side compressing mechanism 11b and decompression amounts of first expanding device 15 and the second expanding device 18.

Fig. 2 is a Mollier diagram (P-h diagram) showing an ideal state of refrigerant flowing through the heat pump circuit 10 of the first embodiment of the present invention under conditions that outside air temperature is 7°C, water-entering temperature is 47°C and evaporation temperature is 2.5°C.

Points a to j, and points A and B in Fig. 2 correspond to points in the heat pump circuit 10 shown in Fig. 1.

The state of refrigerant flowing through the heat pump circuit 10 when the heat pump system 1 is operated will be described below based on Fig. 2.

First, high pressure refrigerant (point a) discharged from the high stage-side compressing mechanism 11b radiates heat to the utilization-side heating medium flowing through the utilization-side heating medium circuit 30 in the utilization-side heat exchanger 12 and then, the high pressure refrigerant partially branches off from the heat pump circuit 10 at a refrigerant branch point A.

The branched refrigerant is decompressed to intermediate pressure by the second expanding device 18 and becomes intermediate pressure refrigerant (point i), the refrigerant is heated in the intermediate heat exchanger 13 by high pressure refrigerant flowing through the heat pump circuit 10 after it radiates heat in the utilization-side heat exchanger 12 (point j). High pressure refrigerant flowing through the heat pump circuit 10 after it radiates heat in the utilization-side heat exchanger 12 is cooled (point b) in the intermediate heat exchanger 13 by intermediate pressure refrigerant (point i) flowing through the injection refrigerant circuit 20.

Thereafter, the cooled refrigerant is cooled in an interior heat exchanger 14 by low temperature and low pressure refrigerant which flows out from the heat source-side heat exchanger 16, and the refrigerant is decompressed by the first expanding device 15 in a state (point c) where enthalpy is reduced.

According to this, refrigerant enthalpy of refrigerant (point d) which flows into the heat source-side heat exchanger 16 is also reduced, dryness fraction of refrigerant (weight ratio occupied by gaseous phase with respect to entire refrigerant) when the refrigerant flows into the heat source-side heat exchanger 16 is reduced, and liquid component of the refrigerant is increased. Therefore, a heat absorption amount from outside air is increased in the heat source-side heat exchanger 16.

Low pressure refrigerant (point e) which flows out from the heat source-side heat exchanger 16 is heated in the interior heat exchanger 14, and the refrigerant returns to a suction side (point f) of the low stage-side compressing mechanism 11a. Thereafter, refrigerant flowing through the heat pump circuit 10 is compressed to intermediate pressure in the low stage-side compressing mechanism 11a and temperature thereof becomes high (point g), this refrigerant further heats utilization-side heating medium which flows out from the utilization-side heat exchanger 12 in the intercooler 17 and the refrigerant is brought into a low enthalpy state (point h).

As described above, refrigerant of an amount corresponding to gaseous phase which does not contribute to evaporation in the heat source-side heat exchanger 16 bypasses to the injection refrigerant circuit 20, the refrigerant becomes low temperature intermediate pressure refrigerant (point i), the refrigerant is heated by high pressure refrigerant flowing through the heat pump circuit 10 in the intermediate heat exchanger 13, the refrigerant joints up with refrigerant existing in the outlet of the intercooler 17 at a refrigerant junction B, and it is sucked in the high stage-side compressing mechanism 11b and is compressed.

Therefore, since refrigerant pressure on the suction side (point B) of the high stage-side compressing mechanism 11b is higher than that on the suction side (point d) of the low stage-side compressing mechanism 11a, density of the refrigerant is also higher, and refrigerant which joins up with refrigerant in the outlet of the intercooler 17 is sucked, it is further compressed in the high stage-side compressing mechanism 11b and is discharged. Therefore, a flow rate of refrigerant which flows into the utilization-side heat exchanger 12 is largely increased, and heating capacity in the utilization-side heat exchanger 12 is largely increased.

In addition, since the utilization-side heating medium heated in the utilization-side heat exchanger 12 is heated in the intercooler 17 by refrigerant discharged from the low stage-side compressing mechanism 11a, temperature of the utilization-side heating medium can be made high and ability thereof can be enhanced.

According to the first embodiment of the invention, in the utilization-side heating medium circuit 30 through which utilization-side heating medium flows, the utilization-side heat exchanger 12 and the intercooler 17 are connected to each other in series, the utilization-side heating medium flows through the utilization-side heat exchanger 12 and the intercooler 17 in this order and is heated as shown in Fig. 1.

According to this, a flow rate of utilization-side heating medium flowing through the utilization-side heat exchanger 12 and the intercooler 17 is increased as compared with a case where they are connected to each other in parallel. Therefore, heat transfer coefficient of utilization-side heating medium flowing through the utilization-side heat exchanger 12 and the intercooler 17 is enhanced, heat exchanging efficiency in the utilization-side heat exchanger 12 and the intercooler 17 is enhanced and thus, energy saving performance of the heat pump system 1 can be enhanced.

Further, low temperature utilization-side heating medium flows into the utilization-side heat exchanger 12 from the utilization-side heating medium terminal 32 and heat-exchanges with refrigerant discharged from the high stage-side compressing mechanism 11b. Therefore, temperature of refrigerant in the outlet of the utilization-side heat exchanger 12 is lowered, and the enthalpy difference of the utilization-side heat exchanger 12 is increased. In addition, since refrigerant flows into the heat source-side heat exchanger 16 in a low enthalpy state, a heat absorption amount in the heat source-side heat exchanger 16 is increased, and operational efficiency of the heat pump circuit 10 can be enhanced.

Utilization-side heating medium heated in the utilization-side heat exchanger 12 flows into the intercooler 17, and heat-exchanges with refrigerant discharged from the low stage-side compressing mechanism 11a. Therefore, temperature of refrigerant which flows out from the intercooler 17 becomes high and thus, temperature of refrigerant sucked into the high stage-side compressing mechanism 11b also becomes high.

Therefore, even if the amount of refrigerant flowing through the injection refrigerant circuit 20 is increased, temperature of refrigerant discharged from the high stage-side compressing mechanism 11b can be maintained high. Hence, temperature of the utilization-side heating medium can be made high and ability thereof can be enhanced.

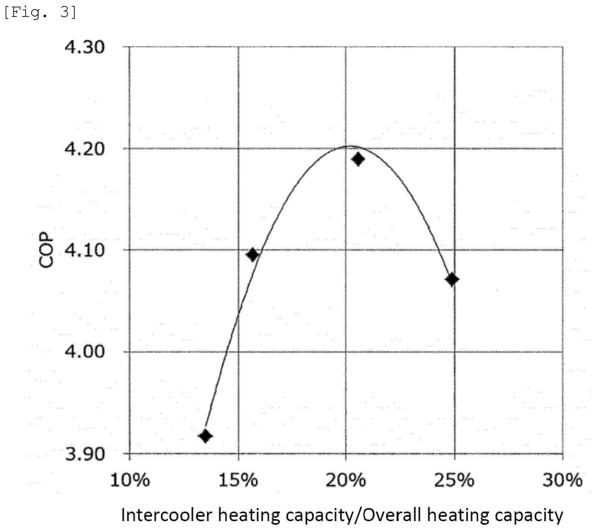

Fig. 3 is a diagram showing a relation between a ratio of heating capacity of the intercooler 17 and overall heating capacity (total heating capacity of utilization-side heat exchanger 12 and intercooler 17) of the heat pump circuit 10, and coefficient of performance (COP) of the heat pump circuit 10 under the conditions that outside air temperature is 7°C, water-entering temperature is 47°C and evaporation temperature is 2.5°C.

As shown in Fig. 3, when the ratio of heating capacity of the intercooler 17 with respect to the overall heating capacity of the heat pump circuit 10 is about 20%, COP of the heat pump circuit 10 becomes the maximum.

According to this, a circulation amount of refrigerant flowing through the heat pump circuit 10 and a transportation amount of utilization-side heating medium flowing through the utilization-side heating medium circuit 30 should be adjusted such that a ratio of the heating capacity of the intercooler 17 with respect to the overall heating capacity of the heat pump circuit 10 becomes 15% to 25%.

More specifically, the control device 19 adjusts operation frequencies of the low stage-side compressing mechanism 11a and the high stage-side compressing mechanism 11b, decompression amounts of the first expanding device 15 and the second expanding device 18, and the number of rotations of the transfer device 31.

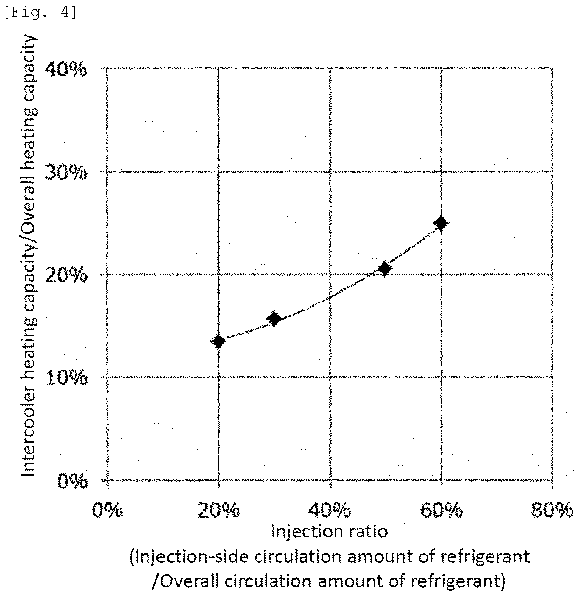

Fig. 4 is a diagram showing a relation between an injection ratio (ratio of circulation amount of refrigerant on the side of injection refrigerant circuit 20 and circulation amount of refrigerant on the side of heat pump circuit 10) in the heat pump circuit 10, and a ratio of heating capacity of the intercooler 17 with respect to the overall heating capacity of the heat pump circuit 10 under conditions that outside air temperature is 7°C, water-entering temperature is 47°C and evaporation temperature is 2.5°C.

Based on Fig. 3, when the ratio of heating capacity of the intercooler 17 with respect to the overall heating capacity of the heat pump circuit 10 is about 20%, COP of the heat pump circuit 10 becomes the maximum.

According to this, it is described that a circulation amount of refrigerant flowing through the heat pump circuit 10 and a transportation amount of utilization-side heating medium flowing through the utilization-side heating medium circuit 30 should be adjusted such that the ratio of heating capacity of the intercooler 17 with respect to the overall heating capacity of the heat pump circuit 10 becomes 15% to 25%.

Therefore, to realize this state, the control device 19 should adjust decompression amounts of the first expanding device 15 and the second expanding device 18 such that the injection ratio in the heat pump circuit 10, i.e., a ratio of the circulation amount of refrigerant on the side of the injection refrigerant circuit 20 with respect to the circulation amount of refrigerant on the side of the heat pump circuit 10 is 30% to 60%, and optimally about 50% as shown in Fig. 4.

When a ratio of heating capacity of the intercooler 17 with respect to the overall heating capacity of the heat pump circuit 10 is increased, this operation condition has high intermediate pressure. As long as the heat pump system 1 is operated in a state where conditions that inflow temperature of the utilization-side heating medium into the intercooler 17 is higher than that of the utilization-side heating medium into the utilization-side heat exchanger 12 and that pressure of refrigerant discharged from the high stage-side compressing mechanism 11b is higher than suction pressure of the high stage-side compressing mechanism 11b are satisfied, heating capacity Q1 of the utilization-side heat exchanger 12 becomes higher than heating capacity Q2 of the intercooler 17.

Here, if a utilization-side heating medium-side flow path cross-sectional area S2 of the intercooler 17 is made larger than a utilization-side heating medium-side flow path cross-sectional area S1 of the utilization-side heat exchanger 12, speed of flow of the utilization-side heating medium flowing through the intercooler 17 can be made small, and flow sound of the utilization-side heating medium in the intercooler 17 can be reduced.

In the heat pump system of the first embodiment of the invention, the utilization-side heat exchanger 12 and the intercooler 17 are connected to each other in series in the utilization-side heating medium circuit 30 through which utilization-side heating medium flows.

According to this, a configuration of the utilization-side heating medium circuit 30 can be simplified as compared with a case where the utilization-side heat exchanger 12 and the intercooler 17 are connected to each other in parallel. Further, by adjusting the transportation amount of the utilization-side heating medium by the transfer device 31, it is possible to also easily adjust temperature of the utilization-side heating medium.

A flow rate of utilization-side heating medium flowing through the utilization-side heat exchanger 12 and the intercooler 17 becomes greater as compared with a case where the utilization-side heat exchanger 12 and the intercooler 17 are connected to each other in parallel. Therefore, heat transfer coefficient of utilization-side heating medium flowing through the utilization-side heat exchanger 12 and the intercooler 17 is enhanced, heat-exchange efficiency in the utilization-side heat exchanger 12 and the intercooler 17 is enhanced and thus, it is possible to enhance energy saving performance as the heat pump system 1.

Further, if the transfer device 31 is driven, utilization-side heating medium flowing through the utilization-side heating medium circuit flows through the utilization-side heat exchanger 12 and the intercooler 17 in this order. Therefore, low temperature utilization-side heating medium flows into the utilization-side heat exchanger 12, and heat-exchanges with refrigerant discharged from the high stage-side compressing mechanism 11b. Thus, temperature of refrigerant in the outlet of the utilization-side heat exchanger 12 is lowered, the enthalpy difference on the side of the utilization-side heat exchanger 12 is increased, and the refrigerant flows into the heat source-side heat exchanger 16 in the low enthalpy state. Hence, the heat absorption amount in the heat source-side heat exchanger 16 is increased, and the operational efficiency of the heat pump system 1 can be enhanced.

### [INDUSTRIAL APPLICABILITY]

As described above, the heat pump system of the present invention includes the multistage compression heat pump circuit, it is possible to simplify both the configuration of the utilization-side heating medium circuit and the control of the flow rate of the utilization-side heating medium. Therefore, the invention is useful for a heat pump system which heats utilization-side heating medium.

### [EXPLANATION OF SYMBOLS]

- 1: heat pump system
- 10: heat pump circuit
- 11: compressing mechanism
- 11a: low stage-side compressing mechanism
- 11b: high stage-side compressing mechanism
- 12: utilization-side heat exchanger (radiator)
- 13: intermediate heat exchanger
- 14: internal heat exchanger
- 15: first expanding device
- 16: heat source-side heat exchanger (evaporator)
- 17: intercooler
- 18: second expanding device
- 19: control device
- 20: injection refrigerant circuit
- 30: utilization-side heating medium circuit
- 31: transfer device (transfer pump)
- 32: utilization-side heating medium terminal
- 51: high pressure-side pressure detecting device
- 52: intermediate pressure-side pressure detecting device
- 53: utilization-side heat exchanger heating medium inflow temperature sensor
- 54: utilization-side heat exchanger heating medium outflow temperature sensor
- 55: intercooler heating medium outflow temperature sensor

## Claims

1. A heat pump system (1) comprising:
a heat pump circuit (10) formed by sequentially connecting, to one another, a compressing mechanism (11) including a high stage-side compressing mechanism (11b) and a low stage-side compressing mechanism (11a), a first expanding device (15) and a heat source-side heat exchanger (16) through at least a pipe, and refrigerant circulating through the heat pump circuit (10);
a control device (19) for controlling operation of the heat pump system (1);
a utilization-side heating medium circuit (30) through which utilization-side heating medium flows;
a utilization-side heat exchanger (12) for heat-exchanging between the refrigerant flowing from the high stage-side compressing mechanism (11b) to the first expanding device (15) and the utilization-side heating medium flowing through the utilization-side heating medium circuit (30);
an intercooler (17) for heat-exchanging between the refrigerant discharged from the low stage-side compressing mechanism (11a) and the utilization-side heating medium flowing through the utilization-side heating medium circuit (30); and
an injection refrigerant circuit (20) in which the refrigerant flowing through the heat pump circuit (10) is branched off from a position between the utilization-side heat exchanger (12) and the first expanding device (15), the branched refrigerant is decompressed by a second expanding device (18), thereafter, the refrigerant joins up, with the refrigerant after it flows out from the intercooler (17), and the joined refrigerant is sucked into the high stage-side compressing mechanism (11b); wherein
the utilization-side heat exchanger (12) and the intercooler (17) are connected to each other in series in the utilization-side heating medium circuit (30), and
the control device (19) is configured to adjust decompression amounts of the first expanding device (15) and the second expanding device (18) such that a ratio of the circulation amount of refrigerant on the side of the injection refrigerant circuit (20) with respect to the circulation amount of refrigerant of the heat pump circuit (10) becomes 30% to 60%, whereby a ratio of a heating capacity Q2 in the intercooler (17) with respect to a total of a heating capacity Q1 in the utilization-side heat exchanger (12) and the heating capacity Q2 in the intercooler (17) is 15% to 25%.

2. The heat pump system (1) according to claim 1, further comprising a transfer device (31), wherein
if the transfer device (31) is driven, the utilization-side heating medium flowing through the utilization-side heating medium circuit (30) flows through the utilization-side heat exchanger (12) and the intercooler (17) in this order.

3. The heat pump system (1) according to claim 1, wherein
a relation between a utilization-side heating medium-side flow path cross-sectional area S1 of the utilization-side heat exchanger (12) and a utilization-side heating medium-side flow path cross-sectional area S2 of the intercooler (17) is S1<S2.

4. The heat pump system (1) according to any one of claims 1 to 3, further comprising an intermediate heat exchanger (13) which heat-exchanges between high pressure refrigerant flowing between the utilization-side heat exchanger (12) and the first expanding device (15) and intermediate pressure refrigerant decompressed by the second expanding device (18) of the injection refrigerant circuit (20).

5. The heat pump system (1) according to any one of claims 1 to 4, further comprising an internal heat exchanger (14) which heat-exchanges between high pressure refrigerant flowing between the utilization-side heat exchanger (12) and the first expanding device (15) and low pressure refrigerant flowing between the heat source-side heat exchanger (16) and the low stage-side compressing mechanism (11a).

6. The heat pump system according to any one of claims 1 to 5, wherein carbon dioxide is used as the refrigerant.

## Patentansprüche

1. Wärmepumpensystem (1), umfassend:
einen Wärmepumpenkreislauf (10), der gebildet ist durch sequentielles miteinander Verbinden einer Kompressionseinrichtung (11), die eine hochstufenseitige Kompressionseinrichtung (11b) und eine niederstufenseitige Kompressionseinrichtung (11a) umfasst, einer ersten Expansionsvorrichtung (15) und eines wärmequellenseitigen Wärmetauschers (16) durch wenigstens eine Rohrleitung, wobei Kältemittel durch den Wärmepumpenkreislauf (10) zirkuliert;
eine Steuervorrichtung (19) zum Steuern des Betriebs des Wärmepumpensystems (1);
einen nutzungsseitigen Heizmediumkreislauf (30), durch den nutzungsseitiges Heizmedium strömt;
einen nutzungsseitigen Wärmetauscher (12) zum Wärmeaustausch zwischen dem von der hochstufenseitigen Kompressionseinrichtung (11b) zur ersten Expansionsvorrichtung (15) strömenden Kältemittel und dem nutzungsseitigen Heizmedium, das durch den nutzungsseitigen Heizmediumkreislauf (30) strömt;
einen Zwischenkühler (17) zum Wärmeaustausch zwischen dem von der niederstufenseitigen Kompressionseinrichtung (11a) abgegebenen Kältemittel und dem nutzungsseitigen Heizmedium, das durch den nutzungsseitigen Heizmediumkreislauf (30) strömt; und
einen Einspritzkältemittelkreislauf (20), in dem das durch den Wärmepumpenkreislauf (10) strömende Kältemittel von einer Position zwischen dem nutzungsseitigen Wärmetauscher (12) und der ersten Expansionsvorrichtung (15) abgezweigt wird, wobei das abgezweigte Kältemittel durch eine zweite Expansionsvorrichtung (18) dekomprimiert wird, wobei sich das Kältemittel anschließend mit dem Kältemittel vereinigt, nachdem es aus dem Zwischenkühler (17) ausgetreten ist, und wobei das vereinigte Kältemittel in die hochstufenseitige Kompressionseinrichtung (11b) gesaugt wird; wobei
der nutzungsseitige Wärmetauscher (12) und der Zwischenkühler (17) in dem nutzungsseitigen Heizmediumkreislauf (30) in Reihe miteinander verbunden sind, und
die Steuervorrichtung (19) dazu konfiguriert ist, Dekompressionsmengen der ersten Expansionsvorrichtung (15) und der zweiten Expansionsvorrichtung (18) so einzustellen, dass ein Verhältnis der Zirkulationsmenge des Kältemittels auf der Seite des Einspritzkältemittelkreislaufs (20) in Bezug auf die Zirkulationsmenge des Kältemittels des Wärmepumpenkreislaufs (10) gleich 30 % bis 60 % wird, wobei ein Verhältnis einer Heizleistung Q2 in dem Zwischenkühler (17) in Bezug auf eine Summe einer Heizleistung Q1 im nutzungsseitigen Wärmetauscher (12) und der Heizleistung Q2 im Zwischenkühler (17) 15 % bis 25 % beträgt.

2. Wärmepumpensystem (1) nach Anspruch 1, das ferner eine Übertragungsvorrichtung (31) umfasst, wobei
dann, wenn die Übertragungsvorrichtung (31) angetrieben wird, das nutzungsseitige Heizmedium, das durch den nutzungsseitigen Heizmediumkreislauf (30) strömt, durch den nutzungsseitigen Wärmetauscher (12) und den Zwischenkühler (17) in dieser Reihenfolge strömt.

3. Wärmepumpensystem (1) nach Anspruch 1, wobei
ein Verhältnis zwischen einer nutzungsseitigen-heizmediumseitigen Strömungsweg-Querschnittsfläche S1 des nutzungsseitigen Wärmetauschers (12) und einer nutzungsseitigen-heizmediumseitigen Strömungsweg-Querschnittsfläche S2 des Zwischenkühlers (17) gleich S1 < S2 ist.

4. Wärmepumpensystem (1) nach einem der Ansprüche 1 bis 3, ferner einen Zwischenwärmetauscher (13) umfassend, der einen Wärmeaustausch zwischen einem Hochdruckkältemittel, das zwischen dem nutzungsseitigen Wärmetauscher (12) und der ersten Expansionsvorrichtung (15) strömt, und einem Mitteldruckkältemittel, das von der zweiten Expansionsvorrichtung (18) des Einspritzkältemittelkreislaufs (20) dekomprimiert worden ist, bewirkt.

5. Wärmepumpensystem (1) nach einem der Ansprüche 1 bis 4, ferner einen internen Wärmetauscher (14) umfassend, der einen Wärmeaustausch zwischen einem Hochdruckkältemittel, das zwischen dem nutzungsseitigen Wärmetauscher (12) und der ersten Expansionsvorrichtung (15) strömt, und einem Niederdruckkältemittel, das zwischen dem wärmequellenseitigen Wärmetauscher (16) und der niederstufenseitigen Kompressionseinrichtung (11a) strömt, bewirkt.

6. Wärmepumpensystem nach einem der Ansprüche 1 bis 5, wobei Kohlenstoffdioxid als Kältemittel verwendet wird.

## Revendications

1. Système de pompe à chaleur (1) comprenant :
un circuit de pompe à chaleur (10) formé par liaison séquentielle, l'un à l'autre, d'un mécanisme de compression (11) comprenant un mécanisme de compression côté étage supérieur (11b) et d'un mécanisme de compression côté étage inférieur (11a), d'un premier dispositif d'expansion (15) et d'un échangeur de chaleur côté source de chaleur (16) par l'intermédiaire d'au moins un tuyau et un fluide réfrigérant circulant à travers le circuit de pompe à chaleur (10) ;
un dispositif de commande (19) pour commander le fonctionnement du système de pompe à chaleur (1) ;
un circuit de fluide caloporteur côté utilisation (30) à travers lequel s'écoule un fluide caloporteur côté utilisation ;
un échangeur de chaleur côté utilisation (12) pour échanger de la chaleur entre le fluide réfrigérant s'écoulant à partir du mécanisme de compression côté étage supérieur (11b) vers le premier dispositif d'expansion (15) et le fluide caloporteur côté utilisation s'écoulant à travers le circuit de fluide caloporteur côté utilisation (30) ;
un refroidisseur intermédiaire (17) pour échanger de la chaleur entre le fluide réfrigérant évacué à partir du mécanisme de compression côté étage inférieur (11a) et le fluide caloporteur côté utilisation s'écoulant à travers le circuit de fluide caloporteur côté utilisation (30) ; et
un circuit de fluide réfrigérant d'injection (20) dans lequel le fluide réfrigérant s'écoulant à travers le circuit de pompe à chaleur (10) est dérivé à partir d'une position entre l'échangeur de chaleur côté utilisation (12) et le premier dispositif d'expansion (15), le fluide réfrigérant dérivé est décomprimé par un deuxième dispositif d'expansion (18), puis le fluide réfrigérant rejoint le fluide réfrigérant après son écoulement hors du refroidisseur intermédiaire (17) et le fluide réfrigérant rassemblé est aspiré dans le mécanisme de compression côté étage supérieur (11b) ;
l'échangeur de chaleur côté utilisation (12) et le refroidisseur intermédiaire (17) étant reliés l'un à l'autre en série dans le circuit de fluide caloporteur côté utilisation (30) et
le dispositif de commande (19) étant conçu pour ajuster des quantités de décompression du premier dispositif d'expansion (15) et du deuxième dispositif d'expansion (18) de telle sorte qu'un rapport de la quantité de circulation de fluide réfrigérant sur le côté du circuit de fluide réfrigérant d'injection (20) à la quantité de circulation de fluide réfrigérant du circuit de pompe à chaleur (10) devient de 30 % à 60 %, un rapport d'une capacité de chauffage Q2 dans le refroidisseur intermédiaire (17) à un total d'une capacité de chauffage Q1 dans l'échangeur de chaleur côté utilisation (12) et de la capacité de chauffage Q2 dans le refroidisseur intermédiaire (17) étant de 15 % à 25 %.

2. Système de pompe à chaleur (1) selon la revendication 1, comprenant en outre un dispositif de transfert (31), dans lequel, si le dispositif de transfert (31) est entraîné, le fluide caloporteur côté utilisation s'écoulant à travers le circuit de fluide caloporteur côté utilisation (30) s'écoule à travers l'échangeur de chaleur côté utilisation (12) et le refroidisseur intermédiaire (17) dans cet ordre.

3. Système de pompe à chaleur (1) selon la revendication 1, dans lequel une relation entre une surface de section transversale S1 de trajet d'écoulement côté fluide caloporteur côté utilisation de l'échangeur de chaleur côté utilisation (12) et une surface de section transversale S2 de trajet d'écoulement côté fluide caloporteur côté utilisation du refroidisseur intermédiaire (17) est S1 < S2.

4. Système de pompe à chaleur (1) selon l'une quelconque des revendications 1 à 3, comprenant en outre un échangeur de chaleur intermédiaire (13) qui échange de la chaleur entre un fluide réfrigérant à haute pression s'écoulant entre l'échangeur de chaleur côté utilisation (12) et le premier dispositif d'expansion (15) et un fluide réfrigérant à pression intermédiaire décomprimé par le deuxième dispositif d'expansion (18) du circuit de fluide réfrigérant d'injection (20).

5. Système de pompe à chaleur (1) selon l'une quelconque des revendications 1 à 4, comprenant en outre un échangeur de chaleur interne (14) qui échange de la chaleur entre un fluide réfrigérant à haute pression s'écoulant entre l'échangeur de chaleur côté utilisation (12) et le premier dispositif d'expansion (15) et un fluide réfrigérant à basse pression s'écoulant entre l'échangeur de chaleur côté source de chaleur (16) et le mécanisme de compression côté étage inférieur (11a).

6. Système de pompe à chaleur selon l'une quelconque des revendications 1 à 5, dans lequel du dioxyde de carbone est utilisé en tant que fluide réfrigérant.
